# EUROPÄISCHE PATENTSCHRIFT

(11) **EP 1 628 527 B1**
(45) Veröffentlichungstag und Bekanntmachung des Hinweises auf die Patenterteilung: **07.03.2007**
(21) Anmeldenummer: 04735205.9
(22) Anmeldetag: 28.05.2004
(51) Int. Cl.: A01K 63/04

(54) **VERFAHREN ZUR VERSORGUNG EINES BIOLOGISCH GENUTZTEN WÄSSRIGEN SYSTEMS MIT SAUERSTOFF, UND EINE VORRICHTUNG UND EIN SET ZUR DURCHFÜHRUNG DIESES VERFAHRENS**
METHOD FOR SUPPLYING A BIOLOGICALLY UTILIZED AQUEOUS SYSTEM WITH OXYGEN, AND DEVICE AND SET FOR CARRYING OUT SAID METHOD
PROCEDE POUR ALIMENTER EN OXYGENE UN SYSTEME AQUEUX D'UTILISATION BIOLOGIQUE, DISPOSITIF ET SET POUR REALISER CE PROCEDE

(30) Priorität: 30.05.2003 DE 10324563
(43) Veröffentlichungstag der Anmeldung: 01.03.2006
(73) Patentinhaber: Söchting, Klaus, Dr., 82544 Attenham (DE)
(72) Erfinder: Söchting, Klaus, Dr., 82544 Attenham (DE)
(74) Vertreter: HOFFMANN EITLE
(86) Internationale Anmeldenummer: PCT/EP2004/005791
(87) Internationale Veröffentlichungsnummer: WO 2004/105476

(56) Entgegenhaltungen:
- EP-A- 0 905 086
- US-A- 3 542 524
- US-A- 4 440 648
- US-A- 4 466 556
- US-B1- 6 491 890

## Beschreibung

Die Erfindung betrifft ein Verfahren zur Versorgung eines biologisch genutzten wäßrigen Systems mit Sauerstoff, d.h. der Erzeugung von Sauerstoff in einem biologisch genutzten wäßrigen System, insbesondere in einem System, das einen erhöhten Sauerstoffbedarf aufweist, sowie eine Vorrichtung und ein Set zur Durchführung dieses Verfahrens.

Aerobe (sauerstoffverbrauchende) Organismen, deren natürlicher Lebensraum wäßrige Systeme sind, beziehen den für ihren Stoffwechsel erforderlichen Sauerstoff (O₂) aus dem sie umgebenden Wasser, in dem der Sauerstoff in gelöster Form vorliegt. Der von den Organismen aufgenommene Sauerstoff wird durch Stoffwechselprozesse zu CO₂ umgesetzt. Die Nachführung von Sauerstoff in das wäßrige System erfolgt einerseits durch diffusive Lösungsprozesse an der Grenzfläche zwischen wäßrigem System und der Atmosphäre, sowie durch in dem wäßrigen System befindliche Photosynthese betreibende Organismen. Da die Prozesse der Zuführung von Sauerstoff in das wäßrige System relativ langsam ablaufen, ist die mögliche Besiedlungsdichte des wäßrigen Systems mit Sauerstoff verbrauchenden Organismen begrenzt.

Es gibt jedoch Situationen, in denen in einem wäßrigen System ein höherer Besatz (eine höhere Organismendichte unter gedrängter Haltung) mit Sauerstoff verbrauchenden Organismen gewünscht ist, als die auf natürlichem Wege erfolgende Sauerstoffzuführung zuläßt. In einem solchen Fall muß Sauerstoff zugeführt werden.

Beispiele für eine solche gedrängte Haltung sind die Haltung von Fischen oder anderen Wassertieren für Zier- oder Nahrungszwecke, während des Transports, zur zeitlich begrenzten Darbietung, beispielsweise im Rahmen einer Zierfischbörse, sowie die vorübergehende Aufbewahrung während Wartungs- und/oder Reinigungsarbeiten von Aquarien, Teichen, Zuchtbehältern, etc.

Die gebräuchlichste Technik zur Zuführung von zusätzlichem Sauerstoff in ein wäßriges System ist das fein verteilte Einblasen von Luft oder reinem Sauerstoff über eine entsprechende technische Anlage. Ein Großteil des Gases entweicht jedoch aus dem wäßrigen System, so daß diese Technik nur in offenen Tanks durchgeführt werden kann. Ferner ist ein erheblicher technischer Aufwand erforderlich. So müssen elektrisch betriebene Zuführvorrichtung einschließlich der erforderlichen Stromversorgung bereitgestellt werden, sowie technische Vorrichtungen, die den Einsatz von Druckgasflaschen ermöglichen. In vielen Bereichen ist ein solcher Aufwand jedoch nicht möglich und/oder erwünscht, wie beispielsweise bei der Reinigung von Fischteichen und Aquarien, dem Transport von Fischen, beispielsweise von Zierfischen, Köderfischen oder Setzlingen, und der Darbietung von Zierfischen auf einer Zierfischbörse.

Die im Wasser gelöste Menge Sauerstoff beträgt unter üblichen Umgebungsbedingungen weniger als 10 mg/l. Ein Fisch verbraucht etwa 1 mg Sauerstoff pro g Körpergewicht und Stunde. Ferner muß für die effiziente Aufnahme des Sauerstoffs aus dem Wasser eine gewisse Mindestkonzentration vorhanden sein. Daher ist die ohne externe Zuführung im Wasser bevorratete Sauerstoffmenge nur für eine sehr geringe Besatzdichte und Haltungsdauer ausreichend.

Für höhere Besatzdichten und/oder längere Haltungsdauern ist die zusätzliche Zufuhr von Sauerstoff unabdingbar.

Will man die oben beschriebene, technisch aufwendige Methode vermeiden, stehen einem nur wenige alternative Möglichkeiten zur Verfügung.

In geschlossenen Systemen, wie beispielsweise einem Fischtransportbeutel, wird eine Gasblase (Luft, Sauerstoff oder Mischungen daraus) über der Wasseroberfläche eingeschlossen. Diese Gasblase benötigt jedoch ein großes Volumen (in der Praxis ist das Verhältnis Wasser:Gasblase ungefähr 1:5), und der Sauerstoff muß durch Bewegen des Beutels in das Wasser eingewaschen werden.

Eine andere Technik zur Versorgung eines biologisch genutzten wäßrigen Systems mit Sauerstoff ist in DE 31 090 64 und der parallelen US 4,466,556 beschrieben. Danach wird eine H₂O₂-Lösung in einem separaten Behältnis mittels eines Keramik-Katalysators langsam und kontinuierlich zersetzt und damit über eine Austrittsöffnung ausgetrieben. Ein die Austrittsöffnung umgebender weiterer fester Katalysator sorgt dafür, daß das H₂O₂ aus der ausgetriebenen Lösung zersetzt und somit Sauerstoff freigesetzt wird. Da der feste Katalysator lokal begrenzt ist, entsteht der Sauerstoff auch nur lokal an dessen Oberfläche.

Aufgabe der vorliegenden Anmeldung ist es daher, ein Verfahren bereitzustellen, das es ermöglicht, die Sauerstoffversorgung in einem wäßrigen System mit hoher Besatzdichte an Sauerstoff verbrauchenden Organismen über einen längeren Zeitraum sicherzustellen.

Erfindungsgemäß wird diese Aufgabe gelöst durch ein Verfahren, das die Versorgung eines biologisch genutzten wäßrigen Systems mit Sauerstoff ermöglicht, wie es in Anspruch 1 definiert ist. Vorzugsweise erfolgt die Versorgung mit Sauerstoff in kontinuierlicher, d. h. für einen vorher bestimmbaren Zeitraum im wesentlichen konstanter Weise, wie in Anspruch 2 definiert. Weitere bevorzugte Ausführungsformen ergeben sich aus den Ansprüchen 3-10.

Darüber hinaus wird die obige Aufgabe gelöst durch die erfindungsgemäße Vorrichtung zur Durchführung des erfindungsgemäßen Verfahrens, wie in Anspruch 11 definiert. Bevorzugte Ausführungsformen ergeben sich aus den Ansprüchen 12-18.

Ebenso zur Lösung des obigen Problems geeignet ist das erfindungsgemäß bereitgestellte Set zur Durchführung des Verfahrens gemäß Anspruch 19, das eine erfindungsgemäße Vorrichtung und die zur Durchführung des Verfahrens erforderlichen Ausgangssubstanzen enthält.

Das erfindungsgemäße Verfahren zur kontinuierlichen Versorgung eines biologisch genutzten wäßrigen Systems mit Sauerstoff umfaßt die folgenden Schritte:
i) Zugabe einer vorherbestimmten Menge einer Katalase in das biologisch genutzte wäßrige System,
ii) Zugabe von H₂O₂ oder eines Salzes davon in das biologisch genutzte wäßrige System, und
iii) katalytische Zersetzung des in das System abgegebenen Peroxids, unter Einwirkung der Katalase, in Wasser und O₂.

Vorzugsweise erfolgt Schritt ii) durch Austreiben einer wäßrigen Peroxid-Lösung aus einem Vorratsbehälter in das biologisch genutzte wäßrige System mittels einer in dem Vorratsbehälter ablaufenden gasdruckerzeugenden chemischen Reaktion.

Durch dieses Verfahren, die erfindungsgemäße Vorrichtung und das zur Durchführung des Verfahrens verwendete Set werden folgende vorteilhafte Effekte erzielt:
- Die Freisetzung von O₂ erfolgt platzsparend und preisgünstig in einer für hohe Besatzdichten geeigneten Menge/Zeiteinheit.
- Es kann eine große Menge O₂ in den Ausgangssubstanzen gespeichert und über eine lange Zeit abgegeben werden.
- Die erzeugte O₂-Menge je Zeiteinheit kann nach Bedarf eingestellt und (bei konstanter Temperatur) über einen langen Zeitraum konstant gehalten werden.
- In der bevorzugten Ausführungsform gemäß Anspruch 2 ist ein weiterer besonderer Vorteil, daß der mit Temperaturschwankungen einhergehende veränderliche Sauerstoffbedarf von Fischen oder anderen Organismen durch die sich automatisch anpassende Sauerstoffabgabe kompensiert wird. Ein Nachjustieren der Sauerstoffabgabe aufgrund von Temperaturschwankungen ist daher nicht erforderlich.
- Durch die Verwendung eines im wäßrigen System selber fein verteilten Katalysators (Katalase) wird der Sauerstoff im gesamten Volumen erzeugt, d.h. es kommt nicht zu starken Konzentrationsunterschieden oder gar lokalen Unterversorgungen, auch bei hoher Besatzdichte an sauerstoffverbrauchenden Organismen in dem wäßrigen System.
- In Aquarien, Transport- oder Zwischenbehältern kann in einfacher Weise eine beliebige Menge O₂ pro Zeiteinheit bereitgestellt werden, ohne daß technisch aufwendige Vorrichtungen, Schlauchverbindungen und/oder Verkabelungen erforderlich sind.

Die oben genannte wäßrige Peroxidlösung ist vorzugsweise eine Lösung von Wasserstoffperoxid (H₂O₂) in Wasser. Es können andere Peroxid-Lösungen verwendet werden, wie beispielsweise Lösungen von Salzen (z.B. Additionssalzen) von H₂O₂, die in wäßriger Lösung im Gleichgewicht mit freiem H₂O₂ stehen. Die Konzentration des Peroxids beträgt vorzugsweise 5-50 Gew.-% Peroxid, weiter bevorzugt 10-30 Gew.-%, noch weiter bevorzugt 15-25 Gew.-%.

Es ist festzuhalten, daß das erfindungsgemäße Verfahren auch außerhalb der oben angegebenen Konzentrationsbereiche durchgeführt werden kann. Eine Konzentration von weniger als 5 Gew.-% Peroxid (vorzugsweise H₂O₂) ist jedoch unpraktisch, da mit abnehmender Konzentration das Verhältnis des Volumens der Peroxid-Lösung zu der daraus freisetzbaren Gesamtmenge an Sauerstoff immer größer wird.

Peroxid-Lösungen, insbesondere H₂O₂-Lösungen, mit einer Konzentration von mehr als 50 Gew.-% H₂O₂ weisen zwar ein sehr gutes Verhältnis von Peroxidlösung zu daraus freisetzbarer Sauerstoffmenge auf, jedoch sind derartige Lösungen mit zunehmender Peroxid-Konzentration zunehmend instabil und können zur Zersetzung neigen. Daher ist ihre Handhabung durch ungeübte Anwender nicht unbedenklich.

Die erfindungsgemäß bevorzugt zum Austreiben der Peroxidlösung aus dem Vorratsbehälter ausgenutzte gasdruckerzeugende Reaktion ist eine beliebige Reaktion, die in gesteuerter Weise zur Erzeugung eines gasförmigen Produkts führt. Vorzugsweise ist sie die Umsetzung eines geringen Teils des in der wäßrigen Peroxidlösung vorhandenen Peroxids unter Freisetzung von Sauerstoff als gasförmigem Reaktionsprodukt.

Die Erzeugung des gasförmiges Reaktionsprodukts kann durch einen geeigneten Katalysator katalysiert werden. Durch geeignete Dosierung des Katalysators kann die Menge des erzeugten Gasvolumens pro Zeiteinheit und somit die Austriebsgeschwindigkeit der Peroxid-Lösung innerhalb eines weiten Bereiches exakt eingestellt werden. Dabei braucht eine zeitliche Schwankung der Temperatur nicht berücksichtigt zu werden, da der mit Temperaturschwankungen einhergehende veränderliche Sauerstoffbedarf von Fischen oder anderen Organismen durch die sich automatisch anpassende Sauerstoffabgabe kompensiert wird.

Als Katalysatoren sind beliebige im Stand der Technik als Zersetzungskatalysatoren bekannte Verbindungen geeignet. Wird die Zersetzung eines geringen Teils des in der Peroxidlösung vorhandenen H₂O₂ als gasdruckerzeugende Reaktion ausgenutzt, kann ein beliebiger Katalysator gewählt werden, der die katalytische Zersetzung von H₂O₂ in H₂O und gasförmiges O₂ bewirkt. MnO₂ oder Platin sind bevorzugte Katalysatormaterialien, und besonders bevorzugt ist keramisch gebundenes MnO₂. Es können auch Mischungen aus zwei oder mehr miteinander verträglichen Katalysatoren verwendet werden.

Die Geschwindigkeit, mit der die Gaserzeugung (z.B. Zersetzung von H₂O₂) in dem Vorratsbehälter abläuft, wird bestimmt durch die Menge und Art des Katalysators und die Reaktionstemperatur, d.h. die Temperatur des umgebenden wäßrigen Systems.

Die Peroxidlösung wird durch die gasdruckerzeugende Reaktion durch eine oder mehrere feine Öffnung(en) aus dem Vorratsgefäß ausgetrieben und vom umgebenden wäßrigen System aufgenommen. Daß tatsächlich die Peroxidlösung, und nicht das im Vorratsgefäß erzeugte Gas, durch die Öffnung(en) austritt, ist durch eine geeignete Konstruktion der zur Durchführung des erfindungsgemäßen Verfahrens verwendeten Vorrichtung zu gewährleisten. Die Öffnung(en) sind ferner vorzugsweise so ausgestaltet, daß ein Eindringen des umgebenden wäßrigen Mediums in das Vorratsgefäß ausgeschlossen ist, z. B. durch Ausgestaltung der Austrittsöffnung in Form einer Taucherglocke. Die mit der Vorrichtung zur Durchführung des erfindungsgemäßen Verfahrens in Zusammenhang stehenden Aspekte werden später noch detaillierter beschrieben.

Die zur Freisetzung von Sauerstoff aus der Peroxidlösung verwendete Katalase im wäßrigen System kann eine beliebige Katalase sein. Beispiele hierfür sind aus Tierleber, insbesondere Rinderleber, Blut oder Mikroorganismen gewonnene Katalasen. Bevorzugt sind aus Mikroorganismen gewonnene Katalasen, da sie gegenüber anderen Katalasen eine erhöhte Stabilität aufweisen.

Die Katalase wird dem wäßrigen System in einer solchen Menge zugegeben, daß sie ausreicht, den eingesetzten Vorrat an Peroxid aufzuspalten. Zum Abbau des in 1 ml einer 19,9 %-igen H₂O₂-Lösung enthaltenen Peroxids werden 2.000 U Katalase benötigt.

Nachfolgend wird die Vorrichtung zur Durchführung des erfindungsgemäßen Verfahrens beschrieben.

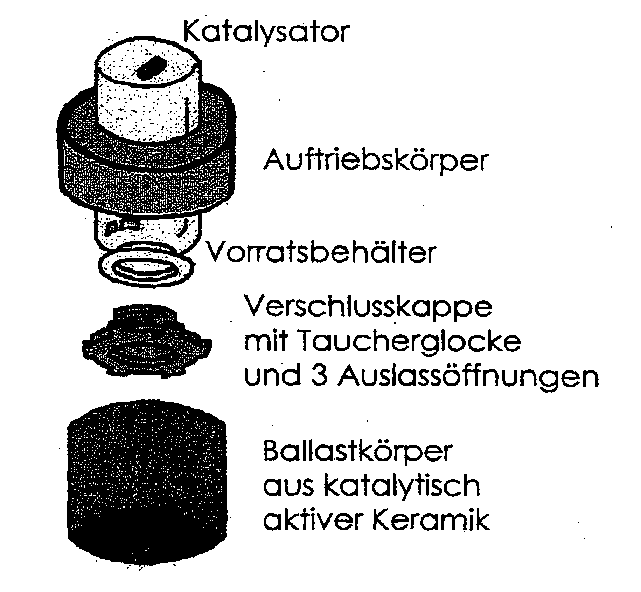

Eine beispielhafte und bevorzugte Ausführungsform der erfindungsgemäß verwendbaren Vorrichtung ist in Figur 1 schematisch dargestellt.

Die Vorrichtung umfaßt einen Vorratsbehälter (1) mit mindestens einer Austrittsöffnung, die das Austreten der wäßrigen Peroxid -Lösung auf Grund der im Vorratsbehälter ablaufenden, gasdruckerzeugenden Reaktion erlaubt, und eine Vorrichtung (2), die dafür sorgt, daß durch die gasdruckerzeugende Reaktion die Peroxid -Lösung, nicht jedoch das erzeugte Gas, aus der mindestens einen Austrittsöffnung austritt.

Die mindestens eine Austrittsöffnung ist so dimensioniert, daß die Peroxidlösung unter den jeweiligen Bedingungen nicht durch die Austrittsöffnung abfließen kann. Andererseits ist die mindestens eine Öffnung so groß, daß ein Tröpfchenaustritt auf Grund des durch den im Vorratsgefäß ablaufenden katalysierten Zersetzungsprozeß aufgebauten Druck möglich ist. vorzugsweise ist die mindestens eine Austrittsöffnung von kreisförmigem oder annähernd kreisförmigem Querschnitt mit einem Durchmesser von ≤ 1 mm, vorzugsweise ≤ 0,5 mm, weiter bevorzugt ≤ 0,1 mm. Beim Einsatz bei Transporten ist darauf zu achten, daß die durch Stöße hervorgerufene Beschleunigung der Lösung nicht zum Auslaufen durch die Öffnung führt. Daher sind für derartige Anwendungen Durchmesser von ≤ 0,1 mm bevorzugt..

In einer bevorzugten Ausführungsform ist der Vorratsbehälter (1) zweiteilig ausgeführt und umfaßt ein Gefäß (1a) und einen darauf fest und wasserdicht aufsetzbaren Stopfen (1b). Das Gefäß (1a) kann aus einem beliebigen transparenten oder opaken Material gefertigt sein, vorzugsweise aus Glas oder Kunststoff. Der fest und wasserdicht auf das Gefäß aufsetzbare Stopfen (1b) ist vorzugsweise aus einem Kunststoffmaterial, und ist vorzugsweise ein einzupressender Stopfen oder ein Schraubverschluß.

Im allgemeinen nicht bevorzugt für das Gefäß (1a) sind Metalle, da diese die Zersetzung der Peroxid -Lösung katalysieren können. Zwar kann eine solche katalysierende Wirkung im Prinzip erwünscht sein, auf Grund des im Laufe des erfindungsgemäßen Verfahrens abnehmenden Pegelstands im Vorratsbehälter ist die Geschwindigkeit dieser Zersetzungsreaktion nicht linear. Dadurch würde die Geschwindigkeit, mit der die Peroxidlösung aus dem Vorratsbehälter ausgetrieben wird, mit zunehmender Dauer des erfindungsgemäßen Verfahrens langsamer. Soweit ein solcher Effekt gewünscht ist, kann jedoch auch ein Gefäß (1a) aus einem Metall eingesetzt werden.

Vorzugsweise ist der Stopfen (1b) so ausgeformt, daß er eine Taucherglocke bildet, so daß kein Wasser von außen in das Vorratsgefäß eindringen kann.

Die Vorrichtung (2) umfaßt vorzugsweise ein Ballastteil (2a) und ein Auftriebteil (2b), die mit dem Vorratsbehälter (1) in einer solchen Weise verbunden sind, daß die mindestens eine Austrittsöffnung bei der Durchführung des erfindungsgemäßen Verfahrens stets nach unten gerichtet ist.

Der Ballastteil (2a) ist ein Gewicht, das im Betrieb der erfindungsgemäßen Vorrichtung dafür sorgt, daß die mindestens eine Austrittsöffnung des Vorratsbehälters (1) stets nach unten zeigt. Der Auftriebteil (2b) verhindert ein Umkippen.

Gemäß einer besonders bevorzugten erfindungsgemäßen Ausführungsform ist der Stopfen (1b) mit der mindestens einen Austrittsöffnung versehen, und das Ballastteil ist ein Ring oder becherförmiges Element, in das der Stopfen fest eingepaßt wird.

Vorzugsweise ist das Ballastteil (2a) aus einem Material gefertigt, das bezüglich der Zersetzung des Peroxids unter Freisetzung von O₂ katalytisch aktiv ist. Ein Beispiel für ein solches Material ist keramisch gebundenes MnO₂. Der Auftriebteil (2b) ist aus einem leichten, schwimmfähigen Material, z.B. Kork, Styropor^{®}, Schaumstoff, etc..

Das erfindungsgemäße Set zur Durchführung des erfindungsgemäßen Verfahrens umfaßt die oben beschriebene erfindungsgemäße Vorrichtung sowie eine Einheitsmenge einer wäßrigen Peroxid-Lösung, vorzugsweise einer Wasserstoffperoxid(H₂O₂)-Lösung, einen Katalysator zur Katalysierung der gasdruckerzeugenden chemischen Reaktion und eine Einheitsmenge einer wäßrigen Katalase-Lösung.

Die bevorzugten Konzentrationen der Peroxidlösung sowie die bevorzugten Katalysatoren und Katalasen sind wie oben im Zusammenhang mit dem erfindungsgemäßen Verfahren beschrieben.

Die Durchführung des erfindungsgemäßen Verfahrens wird nachfolgend unter Bezugnahme auf die oben beschriebenen bevorzugten Ausführungsformen der erfindungsgemäßen Vorrichtung beschrieben.

Das Gefäß (1a) des Vorratsbehälters (1) wird mit einer Einheitsmenge einer wäßrigen Peroxid-Lösung und dem Katalysator für die in dem vorratsgefäß ablaufende gasdruckerzeugende Reaktion beschickt und mit dem Stopfen (1b) fest verschlossen. Dann werden das Ballastteil (2a) und das Auftriebteil (2b) an dem Vorratsbehälter (1) befestigt, und diese Anordnung wird in das mit Sauerstoff zu versorgende wäßrige System, z. B. einen Eimer oder einen Plastikbeutel mit Fischen, gegeben. Ferner wird eine bestimmte Menge Katalase wie oben beschrieben in das wäßrige Medium eingetropft.

Durch die gasdruckerzeugende Reaktion im Vorratsbehälter wird die darin befindliche Peroxid-Lösung aus dem Vorratsbehälter ausgetrieben. In dem wäßrigen System wird dann H₂O₂ (direkt in freier Form aus der Peroxid-Lösung oder über das oben beschriebene Gleichgewicht zwischen Salz und freiem H₂O₂) von der zugefügten Katalase zu H₂O und O₂ zersetzt. Das entstehende O₂ wird im wäßrigen System gelöst und steht den Sauerstoff verbrauchenden Organismen, die in dem wäßrigen System vorhanden sind, für ihre Stoffwechselaktivität zur Verfügung.

Die vorliegende Erfindung wird nachfolgend an Hand eines Beispiels weiter erläutert, das jedoch ausschließlich darstellenden Charakter besitzt, und nicht als den Gegenstand der Erfindung beschränkend anzusehen ist.

Gemäß einer beispielhaften Ausgestaltung umfaßt der Vorratsbehälter (1) einen Glasbehälter, z.B. mit einem Volumen von 30 ml, als Gefäß (1a) sowie einen Kunststoffstopfen (1b), der mit einer Mehrzahl von Austrittsöffnungen versehen ist. Der Glasbehälter wird bis zu einer vorgegebenen Füllhöhe mit einer beispielsweise 19,9 Gew.-%igen H₂O₂-Lösung befüllt und mit dem Stopfen verschlossen. Auf diesen Stopfen wird anschließend ein als Ballastteil (2a) fungierender Keramikbecher mit katalytischer Wirkung gegenüber der Zersetzung von H₂O₂ aufgesetzt. Mit Hilfe eines Schwimmrings (2b) wird die Anordnung austariert und in das mit Sauerstoff zu versorgende wäßrige System gegeben, in das 7 Tropfen (1/3 ml) ml einer wäßrigen Katalase-Lösung mit einer Katalase-Konzentration von 170.000 U/ml eingetropft wurde (entsprechend ca. 2.000 U je ml H₂O₂-Lösung).

Die oben beschriebene Anordnung ist geeignet zur Versorgung eines wäßrigen Systems, z. B. eines Gefäßes für den Fischtransport, mit einem Wasservolumen von ca. 2-20 1. Bei einer Temperatur von 9°C beträgt die Betriebsdauer ca. 144 h, und die Menge an freigesetztem O₂ beträgt ca. 22 mg/h. Eine Erhöhung der Wassertemperatur um 8°C bewirkt in etwa eine Verdopplung der Zersetzungsgeschwindigkeit des Peroxids im Vorratsbehälter, und folglich ihrer Austriebgeschwindigkeit. Bei sonst gleichen Bedingungen ist bei 17°C die Betriebsdauer ca. 72 h, und die pro Stunde freigesetzte O₂-Menge beträgt etwa 44 mg/h. Entsprechend ist bei einer Temperatur von 25°C die Betriebsdauer ca. 36 h, und die freigesetzte O₂-Menge beträgt ca. 88 mg/h.

An Hand der hierin gemachten Angaben ist es für den Fachmann ohne weiteres möglich, für alle vorstellbaren Bedingungen, d.h. für unterschiedliche Wassertemperaturen, verschiedene Besatzdichten des wäßrigen Systems mit Sauerstoff verbrauchenden Organismen, verschiedene gewünschte Betriebszeiten des erfindungsgemäßen Verfahrens, etc. die geeigneten Betriebsbedingungen einzustellen. Das schließt die sachgerechter Auswahl der Art und der Menge des Katalysators, der Menge an Peroxid-Lösung und der Menge an zuzufügender Katalase ein. Daher sind die oben beispielhaft gemachten Angaben in einfacher Weise auf eine Vielzahl verschiedener Umstände und Anforderungen übertragbar.

## Patentansprüche

1. Verfahren zur Versorgung eines biologisch genutzten wäßrigen Systems mit Sauerstoff, das die folgenden Schritte umfaßt:
i) Zugabe einer vorherbestimmten Menge einer Katalase in das biologisch genutzte wäßrige System,
ii) Zugabe von H₂O₂ oder eines Salzes davon in das biologisch genutzte wäßrige System, und
iii) katalytische Zersetzung des in das System abgegebenen Peroxids unter Einwirkung der Katalase in Wasser und O₂.

2. Verfahren gemäß Anspruch 1, worin Schritt ii) durchgeführt wird durch Austreiben einer wäßrigen Peroxid-Lösung aus einem Vorratsbehälter in das biologisch genutzte wäßrige System mittels einer in dem Vorratsbehälter ablaufenden gasdruckerzeugenden chemischen Reaktion.

3. Verfahren gemäß Anspruch 1 oder 2, worin die wäßrige Peroxidlösung eine Wasserstoffperoxid(H₂O₂)-Lösung ist.

4. Verfahren gemäß mindestens einem der Ansprüche 1-3, worin das biologisch genutzte wäßrige System ein System ist, das aufgrund einer hohen Besatzdichte mit sauerstoffverbrauchenden Organismen einen erhöhten Sauerstoffbedarf aufweist.

5. Verfahren gemäß Anspruch 4, worin die sauerstoffverbrauchenden Organismen Fische sind.

6. Verfahren gemäß mindestens einem der Ansprüche 2-5, worin die gasdruckerzeugende chemische Reaktion in dem Vorratsgefäß die Umsetzung von Wasserstoffperoxid unter Freisetzung von Sauerstoff ist.

7. Verfahren gemäß mindestens einem der Ansprüche 2-6, worin die gasdruckerzeugende chemische Reaktion durch einen oder mehrere Katalysator(en) katalysiert wird.

8. Verfahren gemäß Anspruch 7, worin der Katalysator Mangandioxid ist.

9. Verfahren gemäß Anspruch 8, worin das Mangandioxid keramisch gebunden ist.

10. Verfahren gemäß mindestens einem der Ansprüche 1-9, worin die Katalase eine Katalase ist, die aus Mikroorganismen gewonnen wurde.

11. Vorrichtung zur Durchführung des Verfahrens nach mindestens einem der Ansprüche 2-10, umfassend
i) einen Vorratsbehälter (1) mit mindestens einer Austrittsöffnung, die das Austreten der wäßrigen Peroxid-Lösung in das biologisch genutzte Medium aufgrund der im Vorratsbehälter ablaufenden gasdruckerzeugenden Reaktion erlaubt,
ii) eine Vorrichtung (2), die dafür sorgt, daß durch die gasdruckerzeugende Reaktion die Peroxid-Lösung, nicht jedoch das erzeugte Gas aus der mindestens einen Austrittsöffnung austritt, wobei die Vorrichtung (2) ein Ballastteil (2a) und ein Auftriebteil (2b) umfaßt, die mit dem Vorratsbehälter (1) in einer solchen Weise verbunden sind, daß die mindestens eine Austrittsöffnung bei der Durchführung des Verfahrens stets nach unten gerichtet ist.

12. Vorrichtung gemäß Anspruch 11, worin der Vorratsbehälter (1) zweiteilig ausgeführt ist und ein Gefäß (1a) und einen darauf fest und wasserdicht aufsetzbaren Stopfen (1b) umfaßt.

13. Vorrichtung gemäß Anspruch 12, worin der Stopfen (1b) mit der mindestens einen Austrittsöffnung versehen ist, die das Austreten der wäßrigen Peroxid-Lösung aufgrund der im Vorratsbehälter ablaufenden gasdruckerzeugenden Reaktion erlaubt.

14. Vorrichtung gemäß Anspruch 13, worin der Stopfen (1b) als Taucherglocke ausgebildet ist.

15. Vorrichtung gemäß mindestens einem der Ansprüche 11-14, worin der Ballastteil (2a) ein am Stopfen (1b) und/oder dem Gefäß (1a) des Vorratsbehälters anzubringendes Gewicht ist.

16. Vorrichtung gemäß mindestens einem der Ansprüche 11-15, worin der Ballastteil (2a) aus einem katalytisch aktiven Material besteht, das zur Zersetzung von H₂O₂ unter Freisetzung von O₂ in der Lage ist.

17. Vorrichtung gemäß mindestens einem der Ansprüche 11-16, worin der Auftriebteil (2b) ein am Vorratsbehälter in variabler Höhe zu befestigende Schwimmring ist.

18. Set zur Durchführung des Verfahrens nach mindestens einem der Ansprüche 2-10, umfassend
i) eine Vorrichtung, umfassend
a) einen Vorratsbehälter (1) mit mindestens einer Austrittsöffnung, die das Austreten der wäßrigen Peroxid-Lösung aufgrund der im Vorratsbehälter ablaufenden gasdruckerzeugenden Reaktion erlaubt, und
b) eine Vorrichtung (2), die dafür sorgt, daß durch die gasdruckerzeugende Reaktion die Peroxid-Lösung, nicht jedoch das erzeugte Gas aus der mindestens einen Austrittsöffnung austritt,
ii) eine Einheitsmenge einer wäßrigen Wasserstoffperoxid(H₂O₂)-Lösung,
iii) mindestens einen die gasdruckerzeugende chemische Reaktion im Vorratsbehälter katalysierenden Katalysator, und
iv) eine Einheitsmenge einer wäßrigen Katalase-Lösung.

## Claims

1. Process for supplying a biologically applied aqueous system with oxygen which comprises the following steps:
i) addition of a pre-determined quantity of a catalase into the biologically applied aqueous system,
ii) addition of H₂O₂ or a salt thereof into the biologically applied aqueous system, and
iii) catalytic decomposition of the peroxide released into the system under the action of the catalase into water and O₂.

2. Process according to claim 1, wherein step ii) is carried out by expelling an aqueous peroxide solution from a storage container into the biologically applied aqueous system by means of a chemical reaction producing gas pressure which is taking place in the storage container.

3. Process according to claim 1 or 2, wherein the aqueous peroxide solution is a hydrogen peroxide (H₂O₂) solution.

4. Process according to at least one of claims 1-3, wherein the biologically applied aqueous system is a system which has an increased oxygen demand due to a high population density with oxygen-consuming organisms.

5. Process according to claim 4, wherein the oxygen-consuming organisms are fish.

6. Process according to at least one of claims 2-5, wherein the chemical reaction producing gas pressure in the stock vessel is the reaction of hydrogen peroxide with release of oxygen.

7. Process according to at least one of claims 2-6, wherein the chemical reaction producing gas pressure is catalysed by one or more catalyst(s).

8. Process according to claim 7, wherein the catalyst is manganese dioxide.

9. Process according to claim 8, wherein the manganese dioxide is ceramically bound.

10. Process according to at least one of claims 1-9, wherein the catalase is a catalase which has been obtained from microorganisms.

11. Device for carrying out the process according to at least one of claims 2-10, comprising
i) a storage container (1) having at least one outlet opening, which permits the aqueous peroxide solution to escape into the biologically applied medium due to the reaction producing gas pressure which is taking place in the storage container,
ii) a device (2) which ensures that the peroxide solution but not the gas produced escapes due to the reaction producing gas pressure from the at least one outlet opening, wherein the device (2) comprises a ballast part (2a) and a buoyant part (2b), which are connected to the storage container (1) in such a manner that the at least one outlet opening is always directed downwards when carrying out the process.

12. Device according to claim 11, wherein the storage container(1) is made of two parts and comprises a vessel (1a) and a stopper (1b) which can be placed thereon in a fixed and water-tight manner.

13. Device according to claim 12, wherein the stopper (1b) is provided with the at least one outlet opening, which permits the escape of the aqueous peroxide solution due to the reaction producing gas pressure is taking place in the storage container.

14. Device according to claim 13, wherein the stopper (1b) is in the shape of a diving bell.

15. Device according to at least one of claims 11-14, wherein the ballast part (2a) is a weight to be attached to the stopper (1b) and/or the vessel (1 a) of the storage container.

16. Device according to at least one of claims 11-15, wherein the ballast part (2a) consists of a catalytically active material, which is able to decompose H₂O₂ with release of O₂.

17. Device according to at least one of claims 11-16, wherein the buoyant part (2b) is a float ring to be attached to the storage container at variable height.

18. Set for carrying out the process according to at least one of claims 2-10, comprising
i) a device comprising
a) a storage container (1) having at least one outlet opening, which permits the aqueous peroxide solution to escape due to the reaction producing gas pressure which is taking place in the stock container, and
b) a device (2) which ensures that the peroxide solution but not the gas produced escapes due to the reaction producing gas pressure from the at least one outlet opening,
ii) a unit quantity of an aqueous hydrogen peroxide (H₂0₂) solution,
iii) at least one catalyst catalysing the chemical reaction producing gas pressure in the stock container, and
iv) a unit quantity of an aqueous catalase solution.

## Revendications

1. Procédé pour alimenter en oxygène un système aqueux d'utilisation biologique, comprenant les étapes suivantes :
i) addition d'une quantité déterminée à l'avance d'une catalase dans le système aqueux utilisé biologiquement,
ii) addition de H₂O₂ ou d'un sel de celle-ci dans le système aqueux utilisé biologiquement, et
iii) décomposition catalytique du peroxyde délivré dans le système, avec effet de la catalase produisant de l'eau et de l'O₂.

2. Procédé selon la revendication 1, dans lequel l'étape ii) est effectuée par expulsion d'une solution aqueuse de peroxyde hors d'un réservoir de stockage dans le système aqueux d'utilisation biologique, au moyen d'une réaction chimique génératrice d'une pression de gaz, se déroulant dans le réservoir de stockage.

3. Procédé selon la revendication 1 ou 2, dans lequel la solution aqueuse de peroxyde est une solution de peroxyde d'hydrogène (H₂O₂).

4. Procédé selon au moins l'une des revendications 1 à 3, dans lequel le système aqueux d'utilisation biologique est un système qui, du fait de sa haute densité de colonisation par des organismes consommant de l'oxygène, présente un besoin en oxygène augmenté.

5. Procédé selon la revendication 4, dans lequel les organismes consommant de l'oxygène sont des poissons.

6. Procédé selon au moins l'une des revendications 2 à 5, dans lequel la réaction chimique génératrice d'une pression de gaz dans le réservoir de stockage est la conversion de peroxyde d'hydrogène avec dégagement d'oxygène.

7. Procédé selon au moins l'une des revendications 2 à 6, dans lequel la réaction chimique générant une pression de gaz est catalysée par un ou plusieurs catalyseurs.

8. Procédé selon la revendication 7, dans lequel le catalyseur est du dioxyde de manganèse.

9. Procédé selon la revendication 8, dans lequel le dioxyde de manganèse est lié par céramique.

10. Procédé selon au moins l'une des revendications 1 à 9, la catalase étant une catalase obtenue à partir de microorganismes.

11. Dispositif de mise en oeuvre du procédé selon au moins l'une des revendications 2 à 10, comprenant :
i) un réservoir de stockage (1) avec au moins une ouverture de sortie, permettant la sortie de solution aqueuse de peroxyde dans le milieu d'utilisation biologique, du fait de la réaction produisant une pression de gaz, se déroulant dans le réservoir de stockage,
ii) un dispositif (2), veillant à ce que, du fait de la réaction productrice de pression de gaz, la solution de peroxyde, mais cependant pas le gaz produit, sorte d'au moins une ouverture de sortie, le dispositif (2) comprenant une partie de ballast (2a) et une partie de flottaison (2b), reliées au réservoir de stockage (1) de telle manière que la au moins une ouverture de sortie soit toujours tournée vers le bas lors de la mise en oeuvre du procédé.

12. Dispositif selon la revendication 11, dans lequel le réservoir de stockage (1) est réalisé en deux parties et comprend un récipient (1a) et un bouchon (1b) pouvant être placé sur celui-ci, de façon ferme et étanche à l'eau.

13. Dispositif selon la revendication 12, dans lequel le bouchon (1b) est muni de la au moins une ouverture de sortie qui permet la sortie de la solution aqueuse de peroxyde du fait de la réaction productrice de pression de gaz, se déroulant dans le réservoir de stockage.

14. Dispositif selon la revendication 13, dans lequel le bouchon (1b) est réalisé sous la forme de cloche à plongeur.

15. Dispositif selon au moins l'une des revendications 11 à 14, dans lequel la partie de ballast (2a) est une masse à appliquer sur le bouchon (1b) et/ou le récipient (1a) du réservoir de stockage.

16. Dispositif selon au moins l'une des revendications 11 à 15, dans lequel la partie de ballaste (2a) est formée d'un matériau catalytiquement actif, en mesure de décomposer H₂O₂ avec dégagement de O₂.

17. Dispositif selon au moins l'une des revendications 11 à 16, dans lequel la partie de flottaison (2b) est un anneau flottant, à fixer à hauteur variable sur le réservoir de stockage.

18. Nécessaire de mise en oeuvre du procédé selon au moins l'une des revendications 2 à 10, comprenant :
i) un dispositif, comprenant
a) un réservoir de stockage (1) avec au moins une ouverture de sortie, permettant la sortie de solution aqueuse de peroxyde, du fait de la réaction productrice de pression de gaz se déroulant dans le réservoir de stockage, et
b) un dispositif (2) veillant à ce que, du fait de la réaction productrice de pression de gaz, la solution de peroxyde, mais cependant pas le gaz produit, sorte de la au moins une ouverture de sortie,
ii) une quantité unitaire d'une solution aqueuse de peroxyde d'hydrogène (H₂O₂),
iii) au moins une réaction chimique productrice de pression de gaz, dans le catalyseur assurant une catalyse dans le réservoir de stockage, et
iv) une quantité unitaire d'une solution aqueuse de catalase.
